Europäisches Patentamt

European Patent Office

Office européen des brevets

(11) Veröffentlichungsnummer: **0 484 834 A1**

## EUROPÄISCHE PATENTANMELDUNG

(21) Anmeldenummer: **91118674.0**

(22) Anmeldetag: **01.11.91**

(51) Int. Cl.5: **B23Q 15/26**, B23Q 3/18, B24B 19/08, B24B 19/12

(30) Priorität: **06.11.90 DE 4035189**

(43) Veröffentlichungstag der Anmeldung: **13.05.92 Patentblatt 92/20**

(84) Benannte Vertragsstaaten: **DE ES FR GB IT SE**

(71) Anmelder: **Mauser-Werke Oberndorf GmbH Teckstrasse 11 W-7238 Oberndorf(DE)**

(72) Erfinder: **Gruhler, Siegfried Zollernstrasse 10 W-7243 Vöhringen 2(DE)**
Erfinder: **Kronenbitter, Rudolf Alte Strasse 32 W-7240 Horb-Dettingen(DE)**
Erfinder: **Ade, Karl-Josef Lindenstrasse 11 W-7238 Oberndorf(DE)**
Erfinder: **Högerle, Waldemar Ludwig-Trick-Strasse 24 W-7297 Alpirsbach(DE)**

(74) Vertreter: **Hofmann, Gerhard, Dipl.-Ing. Patentassessor et al Stephanstrasse 49 W-8500 Nürnberg 30(DE)**

(54) **Vorrichtung zur Drehwinkelpositionierung einer mit Exzenterorganen versehenen Welle.**

(57) Es wird eine Vorrichtung (10) zur Drehwinkelpositionierung einer mit Exzenterorganen (14) ausgebildeten Welle (12), insbesondere einer Kurbel- bzw. Nockenwelle beschrieben. Die Vorrichtung (10) weist eine Lagereinrichtung (16) für die Welle (12), eine Antriebseinrichtung zur passenden Verdrehung der Welle (12) um ihre Längsachse (28), eine Abtasteinrichtung (26) mit einem elektronischen Ausgang (34) sowie eine mit der Abtasteinrichtung (26) elektrisch verbundene elektronische Steuerungseinrichtung (36) auf, die zur Steuerung der Antriebseinrichtung (22) mit dieser zusammengeschaltet ist.

FIG.1

Rank Xerox (UK) Business Services
(-/2.18/2.0)

Die Erfindung betrifft einer Vorrichtung zur Drehwinkelpositionierung einer mit mindestens einem Exzenterorgan versehenen Welle, insbesondere einer Kurbel- bzw. Nockenwelle. Derartige Wellen werden üblicherweise in einem nicht geordneten, d. h. nicht in einem bestimmten Drehwinkel positionierten Zustand zur weiteren Handhabung angeliefert. Die genaue Orientierung bzw. Positionierung der Wellen in einer bestimmten Drehwinkelstellung ist bislang sehr zeitaufwendig, was sich auf die Produktivität auswirkt.

Der Erfindung liegt die Aufgabe zugrunde, eine Vorrichtung der eingangs genannten Art zu schaffen, mit welcher es zeitsparend präzise möglich ist, Wellen, die mindestens ein Exzenterorgan aufweisen, in jedem gewünschten Drehwinkel zu positionieren.

Diese Aufgabe wird erfindungsgemäß durch die Merkmale des kennzeichnenden Teiles des Anspruches 1 gelöst.

Weiterbildungen der erfindungsgemäßen Vorrichtung sind in den Unteransprüchen gekennzeichnet.

Mit der erfindungsgemäßen Vorrichtung ergibt sich der Vorteil, daß es zeitsparend präzise möglich ist, mit Exzenterorganen versehene Wellen, insbesondere Kurbel- oder Nockenwellen, in jedem gewünschten Drehwinkel zu positionieren, um die Welle daran anschließend bezugsrichtig positioniert z. B. exakt bearbeiten zu können. Die sehr schnell, d. h. zeitsparend, und genau funktionierende Vorrichtung ist selbstverständlich nicht nur bei Kurbel- oder Nockenwellen, sondern ganz allgemein bei mit mindestens einem Exzenterorgan versehenen Wellen anwendbar.

Weitere Einzelheiten, Merkmale und Vorteile ergeben sich aus der nachfolgenden Beschreibung von in der Zeichnung schematisch dargestellten Ausbildungen der erfindungsgemäßen Vorrichtung zur Drehwinkelpositionierung einer mit mindestens einem Exzenterorgan versehenen Welle. Es zeigt:

Figur 1    eine schematische Darstellung der Vorrichtung in einer Seitenansicht bzw. in einer Blockdarstellung,

Figur 2    eine schematische Darstellung der bei der Vorrichtung zur Drehwinkelpositionierung angewandten Abtasteinrichtung in einer Vorderansicht, d. h. in Blickrichtung des Pfeiles II in Figur 1,

Figur 3    eine schematische Darstellung einer zweiten Ausführungsform der Abtasteinrichtung in einer der Figur 2 entsprechenden Blickrichtung,

Figur 4    eine Blockdarstellung einer Ausbildung der Abtasteinrichtung, die mit Lichtschranken ausgebildet ist,

Figur 5    die Funktionsweise der in einer Blickrichtung von vorne gezeichneten Lichtschranken bzw. ihr Zusammenwirken mit einem Exzenter einer um ihre Längsachse rotierenden Welle, sowie die mit einer solchen Abtasteinrichtung generierten Impulsfolge,

Figur 6    eine teilweise aufgeschnittene Seitenansicht einer bevorzugten Ausbildung der Abtasteinrichtung,

Figur 7    eine teilweise aufgeschnittene Ansicht der Abtasteinrichtung gemäß Figur 6 in Blickrichtung des Pfeiles VII von vorne,

Figur 8    eine schematische Darstellung der Abtasteinrichtung gemäß Figuren 6 und 7,

Figur 9    eine Darstellung des zeitlichen Verlaufes der Impulse am SPS-Ausgang und am NC-Ausgang der Steuerungseinrichtung gemäß Figur 1 sowie der jeweiligen Antriebsdrehzahl für die Welle in Abhängigkeit von der Drehwinkelstellung der Welle bzw. den zeitlichen Impulsverlauf in bezug auf die beiden voneinander beabstandeten Tastorgane der Abtasteinrichtung,

Figur 10    eine der Figur 9 ähnliche Darstellung des Impuls- und Drehzahlverlaufes in Abhängigkeit von der Zeit, und

Figur 11    eine schematische Darstellung der Abtasteinrichtung gemäß Figur 8, jedoch mit berührungslos messendem Schalter.

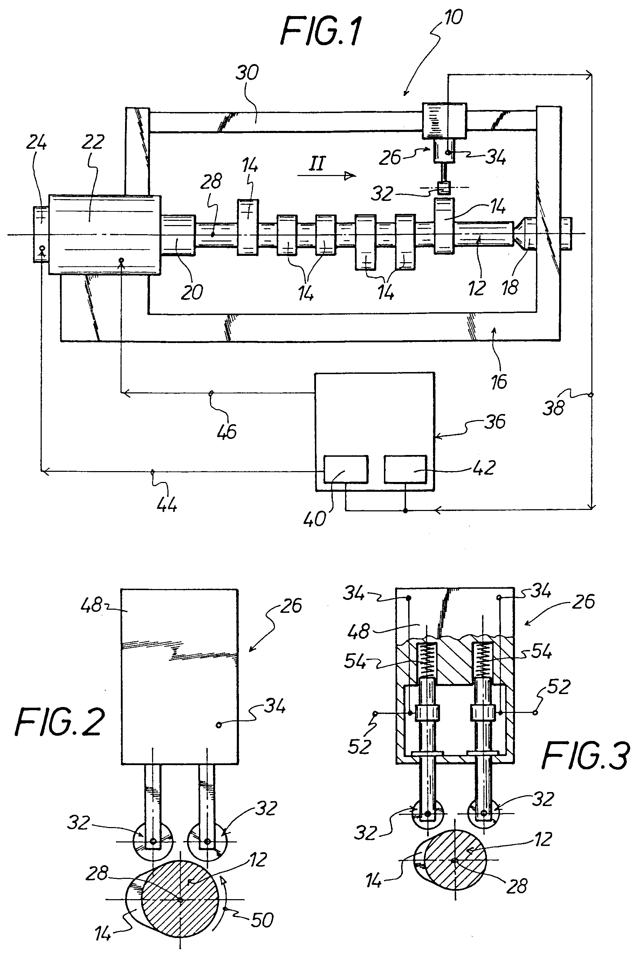

Figur 1 zeigt in einer schematischen Darstellung die Vorrichtung 10 zur exakten Drehwinkelpositionierung einer Welle 12, die mit Exzenterorganen 14 versehen beispielsweise eine Kurbel- oder Nockenwelle bildet. Die Welle 12 ist in eine schematisch angedeutete Lagereinrichtung 16 eingespannt, die beispielsweise auf der einen Seite ein Spitzenorgan 18 und auf der anderen Seite eine Festspanneinrichtung 20 für die Welle 12 aufweist. Bei der Festspanneinrichtung 20 handelt es sich zum Beispiel um ein Spann- oder Backenfutter.

Die Festspanneinrichtung 20 ist an einer Antriebseinrichtung 22 vorgesehen, bei der es sich in vorteilhafterweise um einen Servomotor handeln kann. An der Antriebseinrichtung 22 ist ein Drehgeber 24 vorgesehen.

Die Vorrichtung 10 zur Drehwinkelpositionierung der Welle 12 weist eine Abtasteinrichtung 26 auf, die in Richtung der zentralen Längsachse 28 der Welle 12 verstellbar angeordnet ist, wenn die Vorrichtung 10 zur Abtastung mehrerer Exzenterorgane 14 geeignet sein soll. Zu diesem Zweck kann die Lagereinrichtung 16 der Vorrichtung 10 mit einer entsprechenden Führung 30 ausgebildet sein.

Die Abtasteinrichtung 26 weist zwei voneinander beabstandete Tastorgane 32 auf, die in Figur 1 hintereinander vorgesehen sind, so daß nur eines der beiden Abtastorgane 32 sichtbar ist, während das andere Abtastorgan durch das sichtbare Abtastorgan verdeckt ist. Die Abtasteinrichtung 26 weist außerdem einen elektronischen Ausgang 34 auf, der mit einer schematisch durch einen Block angedeuteten elektronischen Steuerungseinrichtung 36 verbunden ist. Diese elektrisch leitende Verbindung ist in Figur 1 durch die Pfeillinie 38 angedeutet.

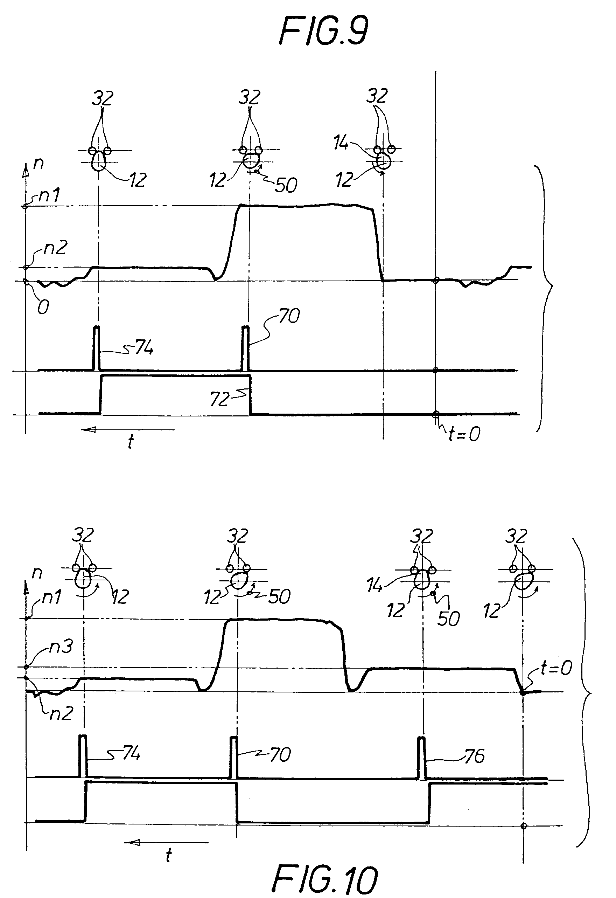

Die elektrische Steuerungseinrichtung 36 ist mit einer NC-Schaltung 40 und mit einer SPS-Schaltung 42 ausgebildet, deren Wirkungsweise weiter unten in Verbindung mit den Figuren 9 und 10 ausführlicher erläutert wird.

Die NC-Schaltung 40 und die SPS-Schaltung 42 sind zueinander parallel geschaltet. Die NC-Schaltung 40 ist mit dem Drehgeber 24 elektrisch leitend verbunden, was durch die Pfeillinie 44 angedeutet ist. Die Pfeillinie 46 deutet die elektrisch leitende Verbindung zwischen der elektronischen Steuerungseinrichtung 36 und der Antriebseinrichtung 22 an.

Die Steuerungseinrichtung 36 ist - wie ebenfalls weiter unten in Verbindung mit den Figuren 9 und 10 noch ausführlicher erläutert wird - zum Umschalten der Antriebseinrichtung 22 zwischen mindestens einer Eildrehzahl und einer im Vergleich zu dieser mindestens einen Eildrehzahl kleinen Meßdrehzahl vorgesehen.

Figur 2 verdeutlicht die beiden voneinander beabstandeten Tastorgane 32, die von einem Gehäuse 48 der Abtasteinrichtung 26 in die gleiche Richtung wegstehen, und die in der Arbeits- bzw. Tastposition der Abtasteinrichtung 26 von dem entsprechenden Exzenter 14 der sich um ihre zentrale Längsachse 28 drehenden Welle 12 zeitlich versetzt aktiviert werden. Die Drehung der Welle 12 um ihre Längsachse 28 ist in Figur 2 durch einen Pfeil 50 angedeutet. Bei einer Drehung der Welle 12 um ihre Längsachse 28 in Richtung des Pfeiles 50, d. h. in einem zum Uhrzeigersinn entgegengesetzten Drehsinn wird zuerst das rechte Tastorgan 32 (Figur 2) aktiviert und daran anschließend zeitlich versetzt das linke Tastorgan 32. Die zeitliche Versetzung der beiden Aktivierungen ist von der Drehzahl der Welle 12, von der Form des Exzenters 14 und von der Welle 12 abhängig.

Mit der Bezugsziffer 34 ist auch in Figur 2 der elektronische Ausgang der Abtasteinrichtung 26 bezeichnet.

In Figur 3 ist eine Ausbildung der Abtasteinrichtung 26 angedeutet, bei welcher die beiden vom Gehäuse 48 der Abtasteinrichtung 26 in die gleiche Richtung wegstehenden und voneinander beabstandeten Tastorgane 32 als Elektroden ausgebildet sind. Die beiden Elektroden 32 sind selbstverständlich gegen das Gehäuse 48 elektrisch isoliert und mit den beiden Polen 52 einer Spannungsquelle kontaktiert. Die Tastorgane 32 sind mittels Federelementen 54 im Gehäuse 48 der Abtasteinrichtung 26 federnd gelagert.

Nimmt die Welle 12 eine derartige Drehwinkelstellung ein, daß der Exzenter 14 sich genau zwischen den beiden Tastorganen 32 befindet, so daß die beiden als Elektroden ausgebildeten Tastorgane 32 am Exzenter 14 anliegen, so ergibt sich durch den Exzenter 14 ein Kurzschluß der beiden Elektroden, was bedeutet, daß die Spannung am Ausgang 34 der Abtasteinrichtung 26 einen anderen Wert annimmt, als wenn nur eines der Tastorgane 32 mit dem entsprechenden Exzenter 14 in Berührung ist, bzw. wenn keines der Tastorgane 32 mit dem entsprechenden Exzenter 14 in Kontakt steht.

Die Führung des elektrischen Stromes über die Welle 12 bzw. den mindestens einem Exzenter 14, kann unter bestimmten Umständen jedoch nicht unkritisch sein, weshalb andere Ausbildungen der Tastorgane 32 z. B. mechanische Tastorgane oder als optische Tastorgane vorteilhaft sein können.

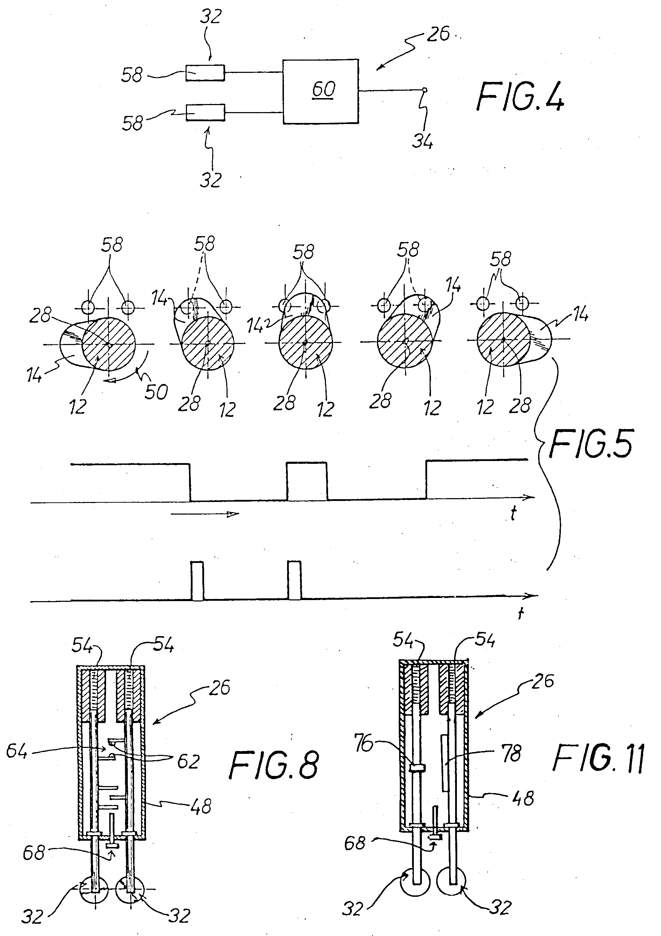

Figur 4 deutet optische Tastorgane 32 an, die als an sich bekannte Lichtschranken 58 ausgebildet sind. Die Lichtschranken 58 sind mit einem elektronischen Schaltkreis 60 zusammengeschaltet, der in Figur 4 nur als Block angedeutet ist. Der elektronische Schaltkreis 60 weist einen Impulsausgang auf, der den Ausgang 34 der Abtasteinrichtung 26 bildet. Der Ausgang 34 ist wiederum mit einer elektronischen Steuerungseinrichtung 36 (siehe Figur 1) verbunden, was in Figur 4 nicht dargestellt ist.

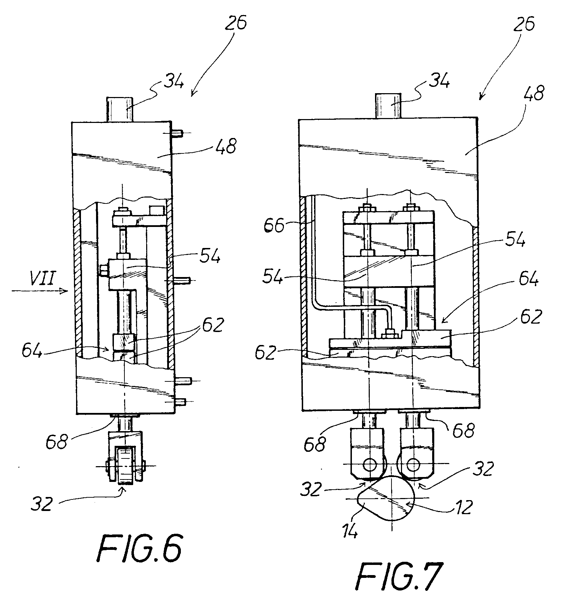

Figur 5 zeigt die beiden voneinander beabstandeten Lichtschranken 58 und die um ihre zentrale Längsachse 28 in Richtung des Pfeiles 50 rotierende Welle 12 mit Exzenter 14, wobei die beiden Lichtschranken 58 in einem passenden Abstand von der Welle 12 zur zentralen Längsachse 28 mindestens annähernd parallel ausgerichtet angeordnet sind. In Figur 5 sind in der oberen Reihe fünf verschiedene Drehwinkelstellungen der Welle 12 gezeichnet, die während einer Drehung der Welle 12 in Richtung des Pfeiles 50 zeitlich aufeinanderfolgend eingenommen werden. Hierbei bleiben die beiden Lichtschranken 58 entweder vollkommen unbedeckt, oder es wird die eine (linke) Lichtschranke 58 bedeckt, oder der Exzenter befindet sich in der Mitte zwischen den beiden Lichtschranken 58. Zu einem daran anschließenden späteren Zeitpunkt ist nur die rechte Lichtschranke 58 vom Exzenter 14 der Welle 12 bedeckt, woran sich wiederum eine Winkelstellung anschließt, bei der beide Lichtschranken unbedeckt sind. In der zweiten Reihe der Figur 5 ist ein entsprechender zeit- bzw. drehwinkelabhängiger Spannungszustand des elektronischen Schaltkreises 60 (siehe Figur 4) gezeichnet. In der dritten, unteren Zeile ist die dem Spannungszustand gemäß zweiter Zeile entsprechende Impulsabhängigkeit von der Zeit gezeichnet, die am Ausgang 34 der elektronischen Schaltung 60 (siehe Figur 4) während einer entsprechenden Rotation der Welle 14 um ihre Längsachse 28 ansteht.

Die Figuren 6 und 7 zeigen eine bevorzugte Ausbildung der Abtasteinrichtung 26 in einer Seiten- und Vorderansicht, wobei das Gehäuse 48 jeweils teilweise aufgeschnitten gezeichnet ist. Bei dieser Ausführungsform der Abtasteinrichtung 26 sind die beiden Tastorgane 32 als mechanische Taster ausgebildet, die durch Federelemente 54 im Gehäuse 48 elastisch federnd gelagert sind. Jeder Taster bzw. jedes Tastorgan 32 ist mit einem Schaltkontakt 62 eines elektrischen Schalters 64 ausgebildet, der mit dem elektronischen Ausgang 34 der Abtasteinrichtung 26 mittels einer Verbindungsleitung 66 elektrisch leitend verbunden ist.

Die Abtasteinrichtung 26 bzw. die beiden Tastorgane 32 der Abtasteinrichtung 26 sind mit Referenzorganen 68 ausgebildet, die zum autonomen Abgleich der Abtasteinrichtung 26 vorgesehen sind. Mit der Bezugsziffer 12 ist auch in Figur 7 die mit mindestens einem Exzenterorgan 14 ausgebildete Welle bezeichnet. Die Funktionsweise der Abtasteinrichtung 26 gemäß Figuren 6 und 7 wird nachfolgend in Verbindung mit den Figuren 8, 9 und 10 erläutert, wobei die Figur 8 eine schematische Darstellung der Abtasteinrichtung 26 gemäß den Figuren 6 und 7 zeigt. Aus dem schematisch angedeuteten Gehäuse 48 der Abtasteinrichtung 26 stehen die Tastorgane 32 vor, die mittels der Federelemente 54 elastisch federnd ausgebildet sind. Jedes der beiden Tastorgane 32 ist mit einem Schaltkontakt 62 des elektrischen Schalters 64 versehen. Das Referenzorgan 68 ist in Figur 8 ebenfalls schematisch angedeutet.

In Figur 11 ist eine alternative Konstruktion der Abtasteinrichtung 26 nach Figur 8 dargestellt. Der Unterschied besteht darin, daß anstelle des Schaltkontaktes 62 eines elektrischen Schalters 64 hier nur an dem einen Taster 32 eine Abtastleiste 78 vorgesehen ist, während der andere Taster 32 einen berührungslosen Wegmeßsensor 76 aufweist, der mit dem elektrischen Ausgang 34 der Abtasteinrichtung 26 elektrisch leitend verbunden ist.

Wird die Abtasteinrichtung 26 zu einem Zeitpunkt t = 0 (siehe Figur 9) auf ein Exzenterorgan 14 einer Welle 12 abgesenkt, und nimmt die Welle 12 hierbei zum Beispiel eine derartige Drehwinkelstellung ein, daß das linke Tastorgan 32 am Exzenterorgan 14 anliegt, so wird mit Hilfe der Steuerungseinrichtung 36 (siehe Figur 1) die Antriebseinrichtung 22 derart aktiviert, daß die Welle 12 mit einer Eildrehzahl n1 angetrieben wird.

Die Welle 12 wird dann solange mit einer Eildrehzahl n1 angetrieben, bis das Exzenterorgan 14 entsprechend einer Drehung im entgegengesetzten Uhrzeigersinn, wie sie durch den Pfeil 50 angedeutet ist, am rechten Tastorgan 32 zur Anlage kommt. Hierbei wird am Impulsausgang ein Impuls 70 generiert. Gleichzeitig wird der Ausgang der SPS-Schaltung 42 auf das andere Niveau umgeschaltet, was in Figur 9 durch die Schaltstufe 72 angedeutet ist, und mit Hilfe der Steuerungseinrichtung 36 die Antriebseinrichtung 22 von der Eildrehzahl n1 auf eine Meßdrehzahl n2 umgeschaltet, die kleiner ist als die Eildrehzahl n1. Auf diese Weise ist sehr zeitsparend eine exakte Drehwinkelpositionierung der Welle 12 möglich.

Die Welle 12 wird mit der Meßdrehzahl n2 so lange im entgegengesetzten Uhrzeigersinn angetrieben, bis das Exzenterorgan 14 sich genau zwischen den beiden Tastorganen 32 befindet. In dieser Drehwinkelstellung wird ein zweiter Impuls 74 generiert, der Ausgang der SPS-Schaltung 42 (siehe Figur 1) wieder in den Ausgangs-Spannungszustand zurückgestellt und die Antriebseinrichtung 22 abgeschaltet, so daß die Drehzahl n zu null wird.

Beim Nulldurchgang, d. h. wenn sich das Exzenterorgan 14 genau zwischen den beiden Tastorganen 32 befindet, wird - wie oben ausgeführt worden ist - ein Meßimpuls 74 generiert, der den Zählerstand der NC-Schaltung 40 (siehe Figur 1) einfriert. Zur Bearbeitung der Nocken- bzw. Kurbelwelle 12 ist das entsprechende Exzenterorgan 14 dann bezugsrichtig exakt positioniert.

Die Darstellung gemäß Figur 10 unterscheidet sich von der in Figur 9 gezeichneten Funktionsdarstellung insbesondere dadurch, daß die Eildrehzahl n1 nach dem Start, d. h. t = 0 nicht direkt, sondern erst über eine Eildrehzahl n3 erreicht wird. Die Meßdrehzahl ist auch in dieser Figur mit n2 bezeichnet.

Im übrigen spricht die grafische Darstellung der Figur 10 mit der entsprechenden Drehwinkelstellung des Exzenterorgans 14 der Welle 12 in bezug auf die Abtastorgane 32 der Figur 9, so daß es nicht erforderlich ist, alle Einzelheiten in Verbindung mit Figur 10 noch einmal detailliert zu beschreiben. Aus Figur 10 ist außerdem ersichtlich, daß der Ausgang der SPS-Schaltung 42 sein Spannungsniveau entsprechend der Generierung von drei Impulsen 76, 70 und 74 nicht nur zweimal sondern dreimal ändert.

**Patentansprüche**

1. Vorrichtung zur Drehwinkelpositionierung einer mit mindestens einem Exzenterorgan (14) versehenen Welle (12), insbesondere einer Kurbel- bzw. Nockenwelle,
gekennzeichnet durch
eine Lagereinrichtung (16) zur drehbaren Lagerung der Welle (12), eine Antriebseinrichtung (22) zur genau passenden Verdrehung der Welle (12) um ihre Längsachse (28), eine einen elektronischen Ausgang (34) aufweisende Abtasteinrichtung (26) zum Abtasten des/jedes Exzenterorganes (14), und eine mit dem Ausgang (34) der Abtasteinrichtung (26) verbundene elektronische Steuerungseinrichtung (36), die zur Steuerung der Antriebseinrichtung (22) mit dieser zusammengeschaltet ist.

2. Vorrichtung nach Anspruch 1,
dadurch gekennzeichnet,
daß die Abtasteinrichtung (26) zwei voneinander beabstandete Tastorgane (32) aufweist, die in der Arbeits- bzw. Tastposition der Abtasteinrichtung (26) von dem entsprechenden Exzenterorgan (14) der sich drehenden Welle (12) zeitlich versetzt aktiviert werden.

3. Vorrichtung nach Anspruch 2,
dadurch gekennzeichnet,
daß die beiden Tastorgane (32) als Lichtschranken (58) ausgebildet sind, die mit einem elektronischen Schaltkreis (60) zusammengeschaltet sind, der einen den Ausgang der Abtasteinrichtung (26) bildenden Impulsausgang (34) aufweist.

4. Vorrichtung nach Anspruch 2,
dadurch gekennzeichnet,
daß die beiden Tastorgane (32) als Elektroden ausgebildet sind, an denen eine elektrische Spannung anliegt, und die mit der elektronischen Steuerungseinrichtung (36) elektrisch leitend verbunden sind.

5. Vorrichtung nach Anspruch 2,
dadurch gekennzeichnet,
daß die beiden Tastorgane (32) als mechanische Taster ausgebildet sind, wobei jeder Taster mit einem Schaltkontakt (62) eines elektrischen Schalters (64) ausgebildet ist, der mit dem elektronischen Ausgang (34) der Abtasteinrichtung (26) elektrisch verbunden ist.

6. Vorrichtung nach einem der vorhergehenden Ansprüche,
dadurch gekennzeichnet,
daß die Antriebseinrichtung (22) einen Servomotor aufweist, der mit der Steuerungseinrichtung (36) elektrisch verbunden ist.

7. Vorrichtung nach einem der vorhergehenden Ansprüche,
dadurch gekennzeichnet,
daß an der Welle (12) bzw. an der Antriebseinrichtung (22) ein Drehgeber (24) vorgesehen ist, der mit einer einen Impulsausgang aufweisenden NC-Schaltung (40) der Steuerungseinrichtung (36) elektrisch verbunden ist.

8. Vorrichtung nach Anspruch 7,
dadurch gekennzeichnet,
daß die Steuerungseinrichtung (36) eine zur NC-Schaltung (40) parallelgeschaltete SPS-Schaltung (42) mit einem Impulsausgang aufweist.

9. Vorrichtung insbesondere nach einem der vorhergehenden Ansprüche,
dadurch gekennzeichnet,
daß die Steuerungseinrichtung (36) zum Umschalten der Antriebseinrichtung (22) zwischen mindestens einer Eildrehzahl (n1, n3) und einer im Vergleich zur mindestens einen Eildrehzahl kleinen Meßdrehzahl (n2) vorgesehen ist.

10. Vorrichtung nach einem der vorhergehenden Ansprüche,
dadurch gekennzeichnet,
daß die Abtasteinrichtung (26) mit einem zum autonomen Abgleich vorgesehenen Referenzorgan (68) ausgebildet ist.

11. Vorrichtung nach Anspruch 2,
dadurch gekennzeichnet,
daß die beiden Tastorgane (32) mechanische Taster sind, wobei ein Taster (32) mit einer Abtastleiste (78) und der zweite Taster (32) mit einem berührungslosen Wegmeßsensor (76) mit einem elektrisch einstellbaren Triggerpunkt ausgebildet ist, der mit dem elektrischen Ausgang (34) der Abtasteinrichtung (26) elektrisch verbunden ist.

# FIG.1

# FIG.2

# FIG.3

FIG.4

FIG.5

FIG.8

FIG.11

FIG.6

FIG.7

FIG.9

FIG.10

## EINSCHLÄGIGE DOKUMENTE

EP 91118674.0

| Kategorie | Kennzeichnung des Dokuments mit Angabe, soweit erforderlich, der maßgeblichen Teile | Betrifft Anspruch | KLASSIFIKATION DER ANMELDUNG (Int Cl 5) |
|---|---|---|---|
| A | DE - A - 3 335 929 (ALLERT) * Fig.; Zusammenfassung; Anspruch 5 * -- | 1,6,7 | B 23 Q 15/26 B 23 Q 3/18 B 24 B 19/08 B 24 B 19/12 |
| A | DE - C - 3 839 030 (GERSTMANN) * Fig. 1,6; Zusammenfassung * -- | 1,7 | |
| A | DE - A - 3 933 383 (HITACHI) * Fig.; Ansprüche 3,5 * -- | 1,11 | |
| A | DE - A - 3 838 019 (TERAMACHI) * Fig. 2,3 ; Zusammenfassung * -- | 1,9 | |
| A | DE - A - 3 151 613 (YOSHII) * Fig. 1; Anspruch * ---- | 1,7 | |

| | RECHERCHIERTE SACHGEBIETE (Int Cl 5) |
|---|---|
| | B 23 Q 3/00 B 23 Q 17/00 B 24 B 19/00 G 05 D 3/00 |

Der vorliegende Recherchenbericht wurde für alle Patentansprüche erstellt.

| Recherchenort | Abschlußdatum der Recherche | Prüfer |
|---|---|---|
| WIEN | 18-12-1991 | BLASL |